# EUROPEAN PATENT SPECIFICATION

(11) **EP 1 175 762 B1**
(45) Date of publication and mention of the grant of the patent: **11.01.2006**
(21) Application number: 01907495.4
(22) Date of filing: 06.02.2001
(51) Int. Cl.: H04L 27/36

(54) **COMMUNICATION SYSTEM WITH PREDISTORTION**
KOMMUNIKATIONSSYSTEM MIT VORVERZERRUNG
SYSTEME DE COMMUNICATION AVEC DISTORSION PREALABLE

(30) Priority: 23.02.2000 GB 0004125
(43) Date of publication of application: 30.01.2002
(73) Proprietor: Koninklijke Philips Electronics N.V., 5621 BA Eindhoven (NL)
(72) Inventor: NAM, Sueng-Il, NL-5656 AA Eindhoven (NL)
(74) Representative: White, Andrew Gordon
(86) International application number: PCT/EP2001/001212
(87) International publication number: WO 2001/063872

(56) References cited:
- WO-A-98/28888

## Description

### Technical Field

The present invention relates to a communications system, particularly but not exclusively, to short range communications operating in domestic and business environments in which a transmitted signal is distorted due to multipath effects.

### Background Art

It is known to combat multipath effects in various ways such as multilevel modulation, transmitter and receiver antenna diversity with beam forming techniques, and spread spectrum, and adaptive equalisation techniques.

WO99/33170 discloses a method of, and apparatus for, providing wideband predistortion linearisation in order to compensate for third order and higher order intermodulation distortion over a wideband. In implementing the method a modulated rf signal is predistorted prior to power amplification and propagation. The modulated rf signal is predistorted in a quadrature phase gain adjuster using a complex predistortion signal produced by a baseband polynominal predistortion circuit which makes use of coefficients produced by a controller. An error signal derived from the difference between a scaled output signal from the power amplifier and the input modulated rf signal is applied to the controller which generates complex control coefficients for use by the predisortion circuit, which also receives the input modulated rf signal. The predistortion signal generates the complex predistortion signal which is used in the quadrature phase gain adjuster to adjust the magnitude and phase of the input modulated rf signal. Additionally the controller generates constant complex coefficients which are added to the complex predistortion signal in order to correct the static portion of the difference between the rf power amplifier input and output. The arrangement disclosed operates on signals which are at rf frequencies and requires non-linear characteristics of hardware elements to be taken into account.

WO 98/28888 discloses a method and apparatus for adaptively predistorting a signal before it is transmitted based on constellation analysis of statistical data measured on the received signal. However, such a method and apparatus involves a complex statistical analysis.

### Disclosure of Invention

An object of the present invention is to predistort a signal to be transmitted so that the received signal after demodulation will show a substantially ideal constellation diagram.

According to one aspect of the present invention there is provided a method operating a communications system, comprising modulating quadrature related components of a carrier signal with quadrature related components of an input baseband data stream, combining the modulated signal components, propagating the combined modulated signal components, receiving the propagated signal, recovering the quadrature related components of the data stream, decoding the baseband data from the recovered quadrature related components, determining if there are constellation errors in the recovered quadrature related components, and in response to determining that there are constellation errors generating a control signal including data relating to said constellation errors, and adaptively adjusting the magnitude of the input baseband data stream in response to said control signal to predistort the data stream in such a manner as to reduce the constellation errors, characterised in that the quadrature related components comprise complementary pairs of quadrature related components and in that determining if there are constellation errors in the recovered quadrature related components comprises comparing at least one complementary pair of the recovered quadrature related components.

According to a second aspect of the present invention there is provided a transceiver comprising a receiving section including a demodulator for deriving baseband products of respective quadrature related components of a received signal and a local oscillator signal, decoding means for recovering data from the baseband products, means for determining the presence of constellation errors in the baseband products, means for deriving, in response to determining the presence of constellation errors, a control signal for use by a transmitting device for adaptively adjusting the magnitude of the input data to reduce the constellation errors, and means for transmitting the control signal, characterised in that the demodulator is adapted to derive baseband products of complementary pairs of quadrature related components of the received signal and the local oscillator signal and in that the means for determining the presence of constellation errors in the demodulated signals is adapted to compare at least one complementary pair of baseband products.

The method in accordance with the present invention not only effectively combats multipath in short range communications channels but also equalises non-linear distortion caused by non-linear hardware elements such as a high power, power amplifier (HPA). The HPA can be driven continuously at saturation because the method in accordance with the present invention can compensate for phase and amplitude errors caused by non-linear characteristics of the circuit. These improvements in performance will enable the communications systems to operate at a higher symbol rate with an improved bit error rate (BER).

In the present invention constellation errors are detected by comparing two complementary channels, that is the in-phase channel I and its complement I' and/or the quadrature channel Q and its complement Q'.

### Brief Description of Drawings

The present invention will now be described, by way of example, with reference to the accompanying drawings, wherein:
Figure 1 is a block schematic diagram of a communications system made in accordance with the present invention,
Figure 2 is a block schematic diagram of a transceiver showing the transmitter section in greater detail, and
Figure 3 is a block schematic diagram of a transceiver showing the receiver section in greater detail.

In the drawings the same reference numerals have been used to indicate corresponding features.

### Modes for Carrying Out the Invention

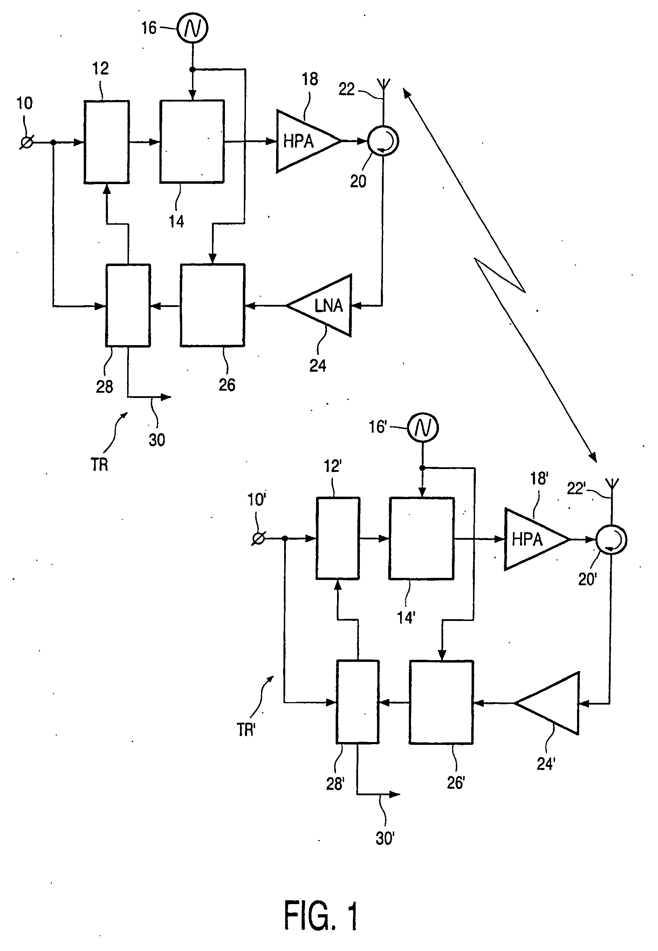

The communications system shown in Figure 1 comprises two or more transceivers TR, TR' which may be separate devices or integrated into a user equipment forming part of a short range, for example, domestic, local area network. Each of the transceivers TR, TR' is of substantially the same architecture and in the interests of brevity the same reference numerals have been used but in the case of transceiver TR' they are shown as primed reference numerals.

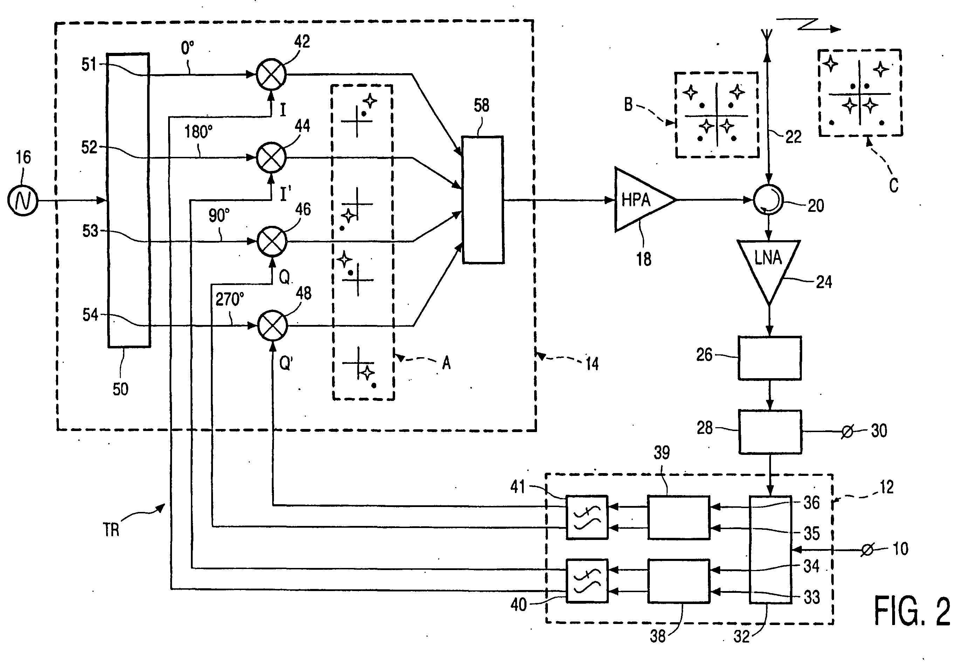

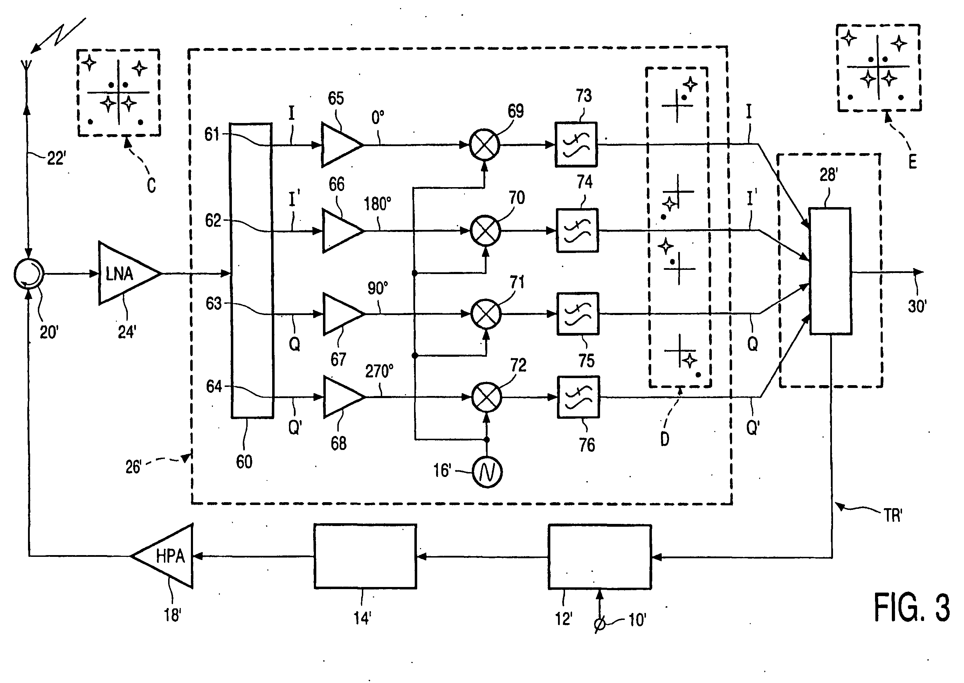

An input data stream is applied to a terminal 10 connected to a data predistorting stage 12 whose operation will be described in greater detail later and to a combined symbol timing recovery, decoder and feedback generator stage 28 to be described later. The predistorted data is supplied to a balanced direct carrier vector modulator 14 which is described in greater detail with reference to Figure 2. A signal generator. 16 provides a carrier frequency to the modulator 14 and a local oscillator frequency to a demodulator 26 which is described in greater detail with reference to Figure 3. An output signal from the modulator 14 is supplied to high power amplifier (HPA) 18 in which the output signal is amplified before being applied to an antenna 22, by way of a circulator 20, for propagation to other transceivers in the LAN.

A signal received by the antenna 22' of the transceiver TR' is applied by way of the circulator 20' to a low noise amplifier (LNA) 24'. An output of the LNA 24' is coupled to a demodulator 26', an output from which is applied to the symbol timing recovery (STR), decoder and feedback data generator stage 28'. Recovered data is present on an output terminal 30'. The stage 28' also determines if the constellation of the received signals has been distorted by multipath effects and non-linearities in the hardware elements such as the HPA 18 of the transceiver TR. This stage 28' generates data relating to the degree of distortion, which data is applied to a controller in the stage 12' which generates a control signal stream which is transmitted to the transceiver TR. The signal received by the antenna 22 is demodulated and applied to the data predistorting stage 12 where it is used to vary the magnitude of the input data stream on the input 10 to predistort the constellation of the signals to be transmitted in such a manner as to overcome the effects of multipath and non-linearities thereby endeavouring that the constellation of the signals received is substantially ideal.

Referring now to Figures 2 and 3 which for convenience respectively show in greater detail the transmitting section of the transceiver TR and the receiving section of the transceiver TR'. However the complete architecture of both these transceivers is substantially the same. Referring initially to Figure 2, the input data stream on the terminal 10 is applied to the data predistorting stage 12 which comprises a serial to parallel converter and controller stage 32 which provides quadrature related versions of the data I, Q and their complements I', Q' respectively on outputs 33, 35, 34, 36. The in-phase data signals I, I' on the outputs 33, 34 are digitised in a digital to analogue converter (DAC) 38 and the outputs undergo baseband filtering in a low pass filter 40 before being applied as first inputs of multipliers 42, 44 of the balanced direct carrier vector modulator 14. The quadrature-phase signals Q, Q' on the outputs 35, 36 are digitised and filtered in a DAC 39 and a low pass filter 41 and applied to first inputs of multipliers 46, 48, respectively of the modulator 14. The carrier signal generated by the signal generator 16 is applied to a quadrature phase splitter 50 which produces in-phase (0°) and quadrature phase (90°) versions of the carrier signal on outputs 51, 53, respectively, and their complements 180° and 270°, respectively, on outputs 52, 54. The outputs 51 to 54 are coupled to second inputs of the multipliers 42 to 48. The directly modulated products on the outputs of the multipliers 42 to 48 have the respective QPSK star constellations shown in the box marked A. The phase and amplitude of each constellation state are controlled by the magnitude of the respective data (or symbol) stream of the first inputs of the multipliers 42 to 48. These outputs are combined in an in-phase combiner 58 and its output is applied to the HPA 18 for amplification prior to propagation by the antenna 22. The constellation of the combined and amplified signals is shown by the box B and the constellation distorted as a result of multipath propagation is shown by the box C. In a multipath environment, the transmitted data stream experience the superposition of the direct path and its multipath echo.

Turning now to Figure 3, the rf carrier signal with the distorted data (or symbol) stream received by the antenna 22' is amplified in the LNA 24' and applied to the decoder 26' which includes a quadrature phase splitter 60 in which the signal is split into four phases 0°, 90°, 180° and 270° representing I, I', Q and Q', respectively, and are present on respective outputs 61 to 64. The respective signal phases are amplified in amplifiers 65 to 68 and applied to first inputs of respective multipliers 69 to 72. A local oscillator signal produced by the signal generator 16' is applied to second inputs of the multipliers 69 to 72 in order to directly demodulate each channel. The recovered demodulated data on the output of each of the multipliers undergoes baseband filtering in respective low pass filters 73 to 76. The phase and amplitude of each demodulated signal is shown in the box D. The outputs of the filters 73 to 76 are applied to the symbol timing recovery (STR), decoder and feedback data generator stage 28'. This stage produces a recovered data stream on the output 30'. As shown in the box E, the constellation of the recovered data is distorted as a result of channel distortion.

Consequently a bit error may occur. Such an error can be detected by comparing the signals in two complementary channels, viz. I and I' or Q and Q', in the stage 28'. When an error is detected, the feedback data generator in the stage 28' generates a control signal stream which is sent by way of the predistorting stage 12', the modulator 14', the HPA 18' to the antenna 22' from where it is transmitted to the transceiver, in this case the transceiver TR, from which the modulated signal was received.

Referring back to Figure 2, the control signal stream is received by the antenna 22 and is demodulated in the demodulator 26. An output from the demodulator 26 is applied by way of the stage 28 to the data predistorting stage 12 to adaptively adjust the magnitude of the input data stream on the input 10. The adjusted baseband signal will be modulated as described above to form a deliberately distorted constellation to send through the multipath channel, which has been found empirically to be quasi-static in domestic and other indoor situations. At the receiving transceiver, the recovered data (or symbol) stream will have an ideal constellation or a constellation which is substantially ideal.

In a non-illustrated variant of the receiver architecture shown in Figure 3, the output from the signal generator 16' is applied to the quadrature phase splitter 60 and the data stream from the LNA 24' is applied directly to the multiplier 69 to 72.

The described architecture reduces the complexity in communications applications because it does not require a complex chain of mixers, filters, amplifiers and IF signal processing. The architecture also provides efficient use of all non-linear circuit elements. For example, the high power amplifier (HPA) 18, 18' can be driven at saturation all the time because the architecture can compensate for phase and amplitude errors caused by non-linear characteristics of the circuit. Furthermore, without any special coding techniques, the transceiver can detect errors by comparing two complementary channels (I and I' or Q and Q'). Furthermore, when it is used with diversity and associated baseband coding techniques, the direct carrier equalisation technique will produce an improvement for wideband applications at microwave and millimetre-wave frequency band. In addition the modulation and demodulation can be done using passive components which do not consume power because of their passive circuit characteristics.

In the present specification and claims the word "a" or "an" preceding an element does not exclude the presence of a plurality of such elements. Further, the word "comprising" does not exclude the presence of other elements or steps than those listed.

From reading the present disclosure, other modifications will be apparent to persons skilled in the art. Such modifications may involve other features which are already known in the design, manufacture and use of short range communication systems and component parts therefor and which may be used instead of or in addition to features already described herein. Industrial Applicability

Communications systems such as short range radio communications and transceivers therefor.

## Claims

1. A method of operating a communications system, comprising modulating quadrature related components of a carrier signal with quadrature related components of an input baseband data stream, combining the modulated signal components, propagating the combined modulated signal components, receiving the propagated signal, recovering the quadrature related components of the data stream, decoding the baseband data from the recovered quadrature related components, determining if there are constellation errors in the recovered quadrature related components, and in response to determining that there are constellation errors generating a control signal including data relating to said constellation errors, and adaptively adjusting the magnitude of the input baseband data stream in response to said control signal to predistort the data stream in such a manner as to reduce the constellation errors,
**characterised in that**
the quadrature related components comprise complementary pairs of quadrature related components and **in that**
determining if there are constellation errors in the recovered quadrature related components comprises comparing at least one complementary pair of the recovered quadrature related components.

2. A transceiver (TR') comprising a receiving section including a demodulator (26') for deriving baseband products of respective quadrature related components of a received signal and a local oscillator signal, decoding means (28') for recovering data from the baseband products, means (28') for determining the presence of constellation errors in the baseband products, means (28') for deriving, in response to determining the presence of constellation errors, a control signal for use by a transmitting device for adaptively adjusting the magnitude of the input data to reduce the constellation errors, and means (18') for transmitting the control signal,
**characterised in that**
the demodulator (26') is adapted to derive baseband products of complementary pairs of quadrature related components of the received signal and the local oscillator signal and **in that**
the means (28') for determining the presence of constellation errors in the demodulated signals is adapted to compare at least one complementary pair of baseband products.

3. A communications system comprising a first transceiver (TR') as claimed in claim 2 and a second transceiver (TR) comprising a transmitter section including a balanced direct carrier vector modulator (14) having first inputs for quadrature related components of a carrier signal and complements of the quadrature related components of the carrier signal and second inputs for quadrature related components of the input data and complements of the quadrature related components of the input data, combining means (58) for combining outputs of the balanced direct carrier vector modulator (16), signal propagation means (22) coupled to said combining means (58), and means (12) for adaptively adjusting the magnitude of the input data to reduce the constellation errors in response to the control signal generated in and transmitted by the first transceiver (TR').

## Patentansprüche

1. Verfahren zum Betrieb eines Kommunikationssystems, das Folgendes umfasst: Modulieren von quadraturbezogenen Komponenten eines Trägersignals mit quadraturbezogenen Komponenten eines Basisband-Eingangsdatenstroms, Kombinieren der modulierten Signalkomponenten, Übertragen der kombinierten modulierten Signalkomponenten, Empfangen des übertragenen Signals, Wiedergewinnen der quadraturbezogenen Komponenten des Datenstroms, Decodieren der Basisbanddaten aus den wiedergewonnenen quadraturbezogenen Komponenten, Ermitteln, ob es in den wiedergewonnenen quadraturbezogenen Komponenten Konstellationsfehler gibt, und in Reaktion auf die Feststellung, dass Konstellationsfehler vorliegen, Erzeugen eines Steuersignals mit Daten, die sich auf die genannten Konstellationsfehler beziehen, und adaptives Anpassen der Größe des Basisband-Eingangsdatenstroms in Reaktion auf das genannte Steuersignal, um den Datenstrom auf eine derartige Weise vorzuverzerren, dass die Konstellationsfehler reduziert werden,
**dadurch gekennzeichnet, dass**
die quadraturbezogenen Komponenten komplementäre Paare von quadraturbezogenen Komponenten umfassen und dass
die Feststellung, ob Konstellationsfehler in den wiedergewonnenen quadraturbezogenen Komponenten vorliegen, den Vergleich von mindestens einem komplementären Paar der wiedergewonnenen quadraturbezogenen Komponenten umfasst.

2. Transceiver (TR'), der Folgendes umfasst: einen Empfangsabschnitt einschließlich eines Demodulators (26') zum Ableiten von Basisbandprodukten von jeweiligen quadraturbezogenen Komponenten eines empfangenen Signals und eines lokalen Oszillatorsignals, Decodiermittel (28') zum Wiedergewinnen von Daten aus den Basisbandprodukten, Mittel (28') zum Feststellen der Anwesenheit von Konstellationsfehlern in den Basisbandprodukten, Mittel (28'), um in Reaktion auf die Feststellung der Anwesenheit von Konstellationsfehlem ein Steuersignals zur Verwendung durch eine Sendevorrichtung abzuleiten, um die Größe der Eingangsdaten adaptiv anzupassen und damit die Konstellationsfehler zu reduzieren, und Mittel (18') zum Senden des Steuersignals,
**dadurch gekennzeichnet, dass**
der Demodulator (26') vorgesehen ist, um Basisbandprodukte von komplementären Paaren von quadraturbezogenen Komponenten des empfangenen Signals und des lokalen Oszillatorsignals abzuleiten und **dadurch**, dass
die Mittel (28') zum Feststellen der Anwesenheit von Konstellationsfehlem in den demodulierten Signalen vorgesehen sind, um mindestens ein komplementäres Paar von Basisbandprodukten zu vergleichen.

3. Kommunikationssystem mit einem ersten Transceiver (TR') nach Anspruch 2 und einem zweiten Transceiver (TR) mit einem Sendeabschnitt mit einem symmetrischen direkten Trägervektormodulator (14) mit ersten Eingängen für quadraturbezogene Komponenten eines Trägersignals und Komplemente der quadraturbezogenen Komponenten des Trägersignals und zweiten Eingängen für quadraturbezogene Komponenten der Eingangsdaten und Komplemente der quadraturbezogenen Komponenten der Eingangsdaten, Kombiniermitteln (58) zum Kombinieren der Ausgangssignale des symmetrischen direkten Trägervektormodulators (16), Signalübertragungsmitteln (22), die mit den genannten Kombiniermitteln (58) verbunden sind, und Mitteln (12) zum adaptiven Anpassen der Größe der Eingangsdaten in Reaktion auf das im ersten Transceiver (TR') erzeugte und von diesem gesendete Steuersignal, um die Konstellationsfehler zu reduzieren.

## Revendications

1. Procédé pour faire fonctionner un système de communications, comprenant le fait de moduler des composantes en quadrature d'un signal porteur avec des composantes en quadrature d'un flux de données d'entrée en bande de base, de combiner les composantes de signal modulées, de transmettre les composantes de signal modulées combinées, de recevoir le signal transmis, de récupérer les composantes en quadrature du flux de données, de décoder les données en bande de base à partir des composantes en quadrature récupérées, de déterminer s'il y a des erreurs de constellation dans les composantes en quadrature récupérées, et, en réponse au fait de déterminer qu'il y a des erreurs de constellation, de générer un signal de commande qui comprend des données relatives auxdites erreurs de constellation, et d'ajuster de façon adaptative l'amplitude du flux de données d'entrée en bande de base en réponse audit signal de commande pour préaccentuer le flux de données de façon à réduire les erreurs de constellation,
**caractérisé en ce que**
les composantes en quadrature comprennent des paires complémentaires de composantes en quadrature, et **en ce que**
le fait de déterminer s'il y a des erreurs de constellation dans les composantes en quadrature récupérées comprend le fait de comparer au moins une paire complémentaire parmi les composantes en quadrature récupérées.

2. Emetteur-récepteur (TR') qui comprend une section de réception comprenant un démodulateur (26') pour dériver des produits en bande de base de composantes en quadrature respectives d'un signal reçu et d'un signal d'oscillateur local, un moyen de décodage (28') pour récupérer des données à partir des produits en bande de base, un moyen (28') pour déterminer la présence d'erreurs de constellation dans les produits en bande de base, un moyen (28') pour, en réponse au fait de déterminer la présence d'erreurs de constellation, dériver un signal de commande pour utilisation par un dispositif d'émission, pour ajuster de façon adaptative l'amplitude des données d'entrée pour réduire les erreurs de constellation, et un moyen (18') pour transmettre le signal de commande,
**caractérisé en ce que**
le démodulateur (26') est adapté pour dériver des produits en bande de base de paires complémentaires de composantes en quadrature du signal reçu et du signal d'oscillateur local, et **en ce que**
le moyen (28') pour déterminer la présence d'erreurs de constellation dans les signaux démodulés est adapté pour comparer au moins une paire complémentaire de produits en bande de base.

3. Système de communications qui comprend un premier émetteur-récepteur (TR') selon la revendication 2 et un deuxième émetteur-récepteur (TR) comprenant une section d'émission qui comprend un modulateur de vecteur de porteuse directe équilibré (14), présentant des premières entrées pour des composantes en quadrature d'un signal porteur et des compléments des composantes en quadrature du signal porteur, et des deuxièmes entrées pour des composantes en quadrature des données d'entrées et des compléments des composantes en quadrature des données d'entrées, un moyen de combinaison (58) pour combiner des sorties du modulateur de vecteur de porteuse directe équilibré (16), un moyen de transmission de signal (22) couplé audit moyen de combinaison (58), et un moyen (12) pour ajuster de façon adaptative l'amplitude des données d'entrée pour réduire les erreurs de constellation en réponse au signal de commande généré dans le premier émetteur-récepteur (TR') et transmis par celui-ci.
